# EUROPÄISCHE PATENTSCHRIFT

(11) **EP 1 831 827 B1**
(45) Veröffentlichungstag und Bekanntmachung des Hinweises auf die Patenterteilung: **17.11.2010**
(21) Anmeldenummer: 05813328.1
(22) Anmeldetag: 02.12.2005
(51) Int. Cl.: G06K 19/077, G06K 13/07, B42D 15/10

(54) **VORRICHTUNG UND VERFAHREN ZUR KONTAKTLOSEN PERSONALISIERUNG VON IN PASSBÜCHERN INTEGRIERTEN CHIPS**
DEVICE AND METHOD FOR THE CONTACTLESS PERSONALIZATION OF CHIPS THAT ARE INTEGRATED INTO PASSPORTS
DISPOSITIF ET PROCEDE POUR PERSONNALISER SANS CONTACT DES PUCES INTEGREES A DES PASSEPORTS

(30) Priorität: 27.12.2004 DE 102004062839
(43) Veröffentlichungstag der Anmeldung: 12.09.2007
(73) Patentinhaber: Mühlbauer AG, 93426 Roding (DE)
(72) Erfinder: BRANDNER, Wolfgang, 93449 Waldmünchen (DE); BUCHMEIER, Werner, 92557 Weiding (DE)
(74) Vertreter: Schmidt, Steffen
(86) Internationale Anmeldenummer: PCT/EP2005/056408
(87) Internationale Veröffentlichungsnummer: WO 2006/069887

(56) Entgegenhaltungen:
- DE-A1- 19 709 562
- US-A- 4 866 259
- US-A- 5 837 991
- BUNDESMINISTERIUM DES INNERN; BSI; DR. DENNIS KÜGLER: "Hintergrundinformation zum ePass: Technik & Sicherheit"[Online] 31. Mai 2005 (2005-05-31), Seiten 1-3, XP002369360 Berlin Gefunden im Internet: URL:http://www.bmi.bund.de/cln_012/nn_1226 88/Internet/Content/Themen/Informationsges ellschaft/Einzelseiten/ePass__Biometrie/Hi ntergrundinfo__ePass.html> [gefunden am 2006-02-23]

## Beschreibung

Die Erfindung betrifft ein Anlagenmodul und ein Verfahren zur kontaktlosen Personalisierung von in Passbüchem integrierten Chips innerhalb einer Anlage zur Bearbeitung, Sortierung und Verpackung einer Vielzahl von Passbüchern mit einem geradlinig verlaufendes Haupttransportweg mit erster Transportrichtung zum Hintereinandertransportieren der Passbücher durch die Anlage mit einer Mehrzahl an Anlagemodulen zur Bearbeitung, Sortierung und/oder Verpackung gemäß den Oberbegriffen der Patentansprüche 1 und 5.

Mit zunehmendem Sicherheitsdenken steigt die Nachfrage nach Passbüchem, insbesondere Reisepassdokumenten, welche einen Chip mit Personalisierungsdaten, die reisepass- und personenspezifische Daten umfassen, zum schnellen Auslesen beinhalten. Derartige mit integrierten Chips versehene Passbücher, sogenannte E-Pässe, müssen in einer Anlage zur Bearbeitung, Sortierung und gegebenenfalls Verpackung in großer Stückzahl unter anderem ein Anlagenmodul zur Personalisierung der Chips durchlaufen. Bei derartigen Anlagen mit einer Mehrzahl an Modulen zur Bearbeitung, Sortierung und/oder Verpackung der Passbücher ist nicht nur ein hoher Durchsatz, also eine maximal mögliche Anzahl an zu bearbeitenden Passbüchern pro Zeiteinheit, die die Anlage durchlaufen, sondern auch eine 100%ige Sicherheit während einer Kodierung der Chips bezüglich der zuverlässigen, insbesondere kontaktlosen Übertragung der Kodierdaten anzustreben.

Es sind Anlagen bekannt, in welchen Passbücher auf einem gemeinsamen Transportweg hintereinander angeordnet werden, um sukzessive die einzelnen Anlagenmodule zur Bearbeitung, Sortierung und Verpackung der Passbücher zu durchlaufen. Solche Anlagen nehmen die Passbücher üblicherweise im geöffneten Zustand auf und weisen einen Durchsatz auf, der von den Bearbeitungszeiten des Kodier-Anlagenmoduls abhängt, da die in diesem Modul stattfindende Personalisierung der Chips und damit der Passbücher die längste Bearbeitungszeit im Vergleich zu den weiteren Anlagenmodulen in Anspruch nimmt.

Da für den Personalisierungsvorgang mittels einer kontaktlosen Kodierung eine genaue Ausrichtung des Reisepasses gegenüber einer die Kodierung des Chips durchführenden Kodierstation notwendig ist, werden derartige einspurig oder auch mehrspurig arbeitende Anlagen verwendet, die eine einfache Handhabung der geöffneten Passbücher auch im Hinblick auf deren genauen Positionierung ermöglichen.

Ein Beispiel für eine derartig mehrspurig arbeitende Anlage, allerdings aus dem Bereich der Chip- und/oder Magnetstreifenkartenbearbeitung ist aus DE 197 09 562 A1 bekannt. In dieser Anlage sind entlang mehrerer parallel zueinander verlaufender Transportwege sämtliche Anlagenmodule in entsprechender Anzahl der Transportwege nebeneinander aufgebaut. Dies führt zu hohen Herstellungs- und Wartungskosten der Anlage.

Insbesondere offenbart DE 197 09 562, gegen die die vorliegenden Ansprüche abgegrenzt wurden, eine Karten-Personalisierungsanlage, welche mehrere Chip- und/oder Magnetstreifen-Bearbeitungsstationen und mehrere Kartenkörper-Bearbeitungsstationen zur Laserbeschriftung aufweist. Die mehrspurige Anlage zeigt dabei entlang mehrerer parallel zueinander verlaufender Transportwege verschiedene Anlagenmodule, die, entsprechend der Anzahl der Transportwege, nebeneinander aufgebaut sind. Zwar vereinfacht ein derartiger Aufbau die genaue Ausrichtung der Karten gegenüber der die Codierung durchführenden Codierstation, führt aber auch zu erhöhten Herstellungs- und Wartungskosten. Im Gegensatz zum Gegenstand der vorliegenden Erfindung ist kein verschiebbares Transportelement zur Aufnahme von Passbüchern bzw. Chip- und/oder Magnetstreifenkarten von den Nebentransportwegen vorgesehen.

US 866 259 offenbart eine Vorrichtung zur Herstellung personalisierter Magnetkarten, bei der eine Vielzahl von Codierstationen nebeneinander angeordnet ist. Die zu personalisierenden Karten werden durch einen Greifer aus einem Magazin entnommen, in eine der Stationen befördert und nach der Codierung in Behälter abgelegt, wobei die Magnetkarten jedoch nicht auf einem einer X-Achse entsprechendem Haupttransportweg befördert werden. Demzufolge liegt der vorliegenden Erfindung die Aufgabe zugrunde, ein Anlagenmodul und ein Verfahren zur kontaktlosen Personalisierung von in Passbüchern integrierten Chips innerhalb einer Anlage zur Bearbeitung, Sortierung und/oder Verpackung einer Vielzahl von Passbüchern zur Verfügung zu stellen, mit der/dem eine Bearbeitung der Passbücher, insbesondere eine Kodierung der Chips, mit hohem Durchsatz möglich ist, wobei die Anlage kostengünstiger in ihrer Herstellung und in ihrem Arbeitsablauf ist.

Diese Aufgabe wird durch die in den Patentansprüchen definierte Erfindung gelöst.

Bei dem erfindungsgemäßen Anlagenmodul zur kontaktlosen Personalisierung von in Passbüchern integrierten Chips für eine Anlage zur Bearbeitung, Sortierung und/oder Verpackung einer Vielzahl von Passbüchern mit einem geradlinig verlaufenden Haupttransportweg mit erster Transportrichtung zum Hintereinandertransportieren der Passbücher durch die Anlage mit einer Mehrzahl an Stationen zur Bearbeitung, Sortierung und/oder Verpackung ist beiderseits des Haupttransportweges jeweils ein damit verbundener geradlinig verlaufender erster Nebentransportweg zum Abführen der Passbücher von dem Haupttransportweg in eine senkrecht zur ersten Transportrichtung verlaufende zweite Transportrichtung angeordnet. Entlang der beiden ersten Nebentransportwege ist eine Mehrzahl an in Bezug auf die zweite Transportrichtung nebeneinander angeordnete Kodierstationen zum Kodieren der Chips der Passbücher und zudem eine gleiche Mehrzahl von den Kodierstationen jeweils zugeordneten, in die erste Transportrichtung verschiebbaren Transportelemente zum vereinzelten Aufnehmen der Passbücher von den Nebentransportwegen angeordnet. Die Transportelemente positionieren jedes Passbuch durch Verschieben in die erste Transportrichtung in den zugeordneten Kodierstation und legen es nach erfolgter Kodierung anschließend auf zweiten Nebentransportwegen, die zum Haupttransportweg zurücklaufen, ab. Die zweiten Nebentransportwege weisen eine zur zweiten Transportrichtung parallel verlaufende dritte Transportrichtung auf. Durch die Anordnung der Mehrzahl von Kodierstationen auf beiden Seiten des Haupttransportweges kann eine gleichzeitige oder zeitlich verschobene Kodierung der Chips, die anfängliche Initialisierung, eine Vorpersonalisierung und die eigentliche Personalisierung des Chips in kontaktloser Weise beinhalten kann, durchgeführt werden. Dies führt zu einer Aufteilung der Kodierverfahren auf eine Vielzahl von Kodierstationen, die vorzugsweise fünf nebeneinander angeordnete Kodierstationen auf jeder Seite des Haupttransportweges sind, um so einer Stauwirkung der auf dem Haupttransportweg stetig nachfolgenden Passbücher im Bereich eines Anlagenmoduls zur Personalisierung der Chips entgegenzuwirken. Durch die Anordnung derartiger erster und zweiter Nebentransportwege in Kombination mit den nebeneinander angeordneten Kodierstationen und den verschiebbaren Transportelementen wird die Beibehaltung eines Haupttransportweges für die vor und nach dem Anlagenmodul zur Personalisierung der Chips angeordneten weiteren Anlagenmodule zur Bearbeitung, Sortierung und/oder Verpackung der Passbücher ermöglicht.

Aufgrund der bezüglich des Haupttransportweges beiderseitigen Anordnung der Kodierstationen ist eine schnellere und einfachere Verteilung der Passbücher von dem Haupttransportweg auf die ersten Nebentransportwege und ein Zurückleiten auf den Haupttransportweg über die zweiten Nebentransportwege möglich. Dies wird mittels zwei den ersten Nebentransportwegen zugeordneten zweiten Schiebeeinrichtungen zum Schieben der auf den Haupttransportweg angeordneten Passbücher auf jeweils den der Schiebeeinrichtung - bezogen auf den Haupttransportweg - gegenüberliegenden Nebentransportweg ermöglicht.

Die verschiebbaren Transportelemente sind vorzugsweise auf einer den Kodierstationen abgewandten Seite der ersten Nebentransportwege in eine Ausgangsstellung stationierbar. sodass ein ungehinderter Transport der Passbücher auf den ersten Nebentransportwegen zu den jeweiligen Positionen, aus welchen sie anschließend in Richtung der ersten Transportrichtung durch das Transportelement über die Kodierstationen geschoben werden, sichergestellt ist.

Die Transportelemente sind vorzugsweise als erste Schiebeeinrichtungen (Pusher) zum Anschieben der ihnen zugeordneten Passbücher von den ersten Nebentransportwegen über die Kodierstationen zu den zweiten Nebentransportwegen in eine parallel zur ersten Transportrichtung verlaufende Transportrichtung ausgebildet. Über den Kodierstationen werden die Passbücher mittels Positionierungseinrichtungen in Richtung der ersten Transportrichtung und - falls es zuvor noch nicht im Bereich der ersten Nebentransportwege geschehen ist - senkrecht zur ersten Transportrichtung ausgerichtet. Anschließend kann die eigentliche Kodierung der Chips mit einer elektronischen Personalisierung durch kontaktlose Übertragung biometrischer personenspezifischer Daten zu der diesem Passbuch, insbesondere Reisepass, zugeordneten Person erfolgen.

Ein Verfahren zur kontaktlosen Personalisierung von den in den Passbüchern integrierten Chips innerhalb der Anlage zur Bearbeitung, Sortierung und/oder Verpackung einer Vielzahl der Passbücher mit einem Haupttransportweg weist vorteilhaft die Schritte des Umleitens der Passbücher von dem Haupttransportweg auf links- und rechtsseitig angeordneten ersten Nebentransportwege, die senkrecht zu der ersten Transportrichtung des Haupttransportwe-ges verlaufen, und des Positionierens der Passbücher jeweils vor einer der Kodierstationen, die entlang der ersten Nebentransportwege in Bezug auf die erste Transportrichtung nebeneinander angeordnet sind, auf. Anschließend werden die positionierten Passbücher mittels den den Kodierstationen zugeordneten Transportelementen von den ersten Transportwegen zu den Kodierstationen verschoben und dort kontaktlos elektronisch kodiert beziehungsweise personalisiert und nach erfolgter Kodierung zu den zweiten Nebentransportwegen weiterverschoben.

Eine Verschiebung von den ersten Nebentransportwegen zu einer Kodierstation wird in Abhängigkeit davon durchgeführt, ob die betreffende Kodierstation unbesetzt ist.

Die zweiten Nebentransportwege befördern die bereits kodierten Passbücher senkrecht zur ersten Transportrichtung zurück zu dem Haupttransportweg und leiten die Passbücher auf den Haupttransportweg über.

Anschließend können die Passbücher auf dem Haupttransportweg folgende Anlagenmodule durchlaufen, wobei die Anlagenmodule je nach Bedarf in die Anlage miteingebaut sind oder nicht:
Ein Anlagenmodul zum Umblättern der Passseiten kann dafür verwendet werden, um anschließend eine Personalisierung auf einer weiteren Seite eines jeden Reisepasses durchzuführen.

Noch während des Transportes auf den zweiten Nebentransportwegen kann auf dem Rückweg von den Kodierstationen zu dem Haupttransportweg eine elektronische Funktionsprüfung der Pässe durchgeführt werden. Für die jeweils auf einer Seite des Haupttransportweges angeordneten Kodierstationen steht ein gemeinsames System für die Prüfung der personalisierten Informationen zur Verfügung. Über ein Vision System OCR III wird die gesamte MRZ (machine readable zone) gelesen und der Hash-Wert für das Lesen des Chips gebildet. Es wird geprüft, ob die Applikation korrekt auf dem Chip installiert wurde und selektiert werden kann. Auf verschiedene Datengruppen, wie zum Beispiel ein aufgetragenes Bild, die MRZ etc. wird zugegriffen. Die Informationen des Chips werden mit den optischen Informationen der MRZ-Zeile miteinander verglichen und die Prüfungsergebnisse werden protokolliert.

Nach der stattgefundenen Überprüfung der Personalisierungsdaten wird das Passbuch mittels einer Blätterstation geschlossen. Mit den Ergebnissen der Chipprüfung wird entschieden, ob der Pass weiter der Bestellverpackung übergeben wird, oder in ein Schlechtfach abgelegt wird.

Weiterhin kann ein Anlagenmodul zur Sortierung der Passbücher durchlaufen werden. Ein weiteres Anlagenmodul beinhaltet die Verpackung, die Prüfung der Verpackungsstapel und die Kennzeichnung der Stapel.

Dem Arbeitsmodul zur Personalisierung vorausgehend kann ein als Anleger ausgebildetes Anlagenmodul angeordnet sein, mittels welchen eine Verteilung auf beispielsweise 10 Anlegereinheiten zur Verfügungstellung von insgesamt 1.200 Passbüchern möglich ist. Dies führt bei einem Maschinendurchsatz von bis zu 1.260 Passbüchern pro Stunde zu einer Autonomiezeit von ca. 1 Stunde.

Ein weiteres Anlagenmodul kann sich auf eine Buchpositionierung richten, um ein Vision System zur Erkennung von Seriennummern oder anderen zusätzlichen Kontrollfunktionen zur Verfügung zu stellen.

In einem weiteren Anlagenmodul kann eine Blätterstation mit einem OCR-I-Vision System zum Auslesen der Seriennummer angeordnet sein. Um die Seriennummer auslesen zu können, muss anfangs die Passdecke geöffnet werden. Hierfür ist die Blätterstation vorgesehen.

Eine weitere 10-stellige Seriennummer kann mittels einem weiteren OCR-II-Vision System und einer davor angeordneten Blätterstation ausgelesen werden, wobei die Seriennummer auf einer weiteren Seite des Reisepasses angeordnet ist.

Mittels einem Anlagenmodul zur RFID-Kontrolle des Chips wird ein Funktionstest des Chips durchgeführt, um die Funktionsfähigkeit des RFID-Inletts zu prüfen und die UID (unique serial number) des Chips auszulesen.

Weitere mögliche Anlagenmodule betreffen beilspielsweise ein weiteres Schlechtfach zum Aussortieren derjenigen Pässe, die Fehler beim Lesen mit den OCR I- Vision System und dem OCR II-Vision System hervorgerufen haben.

Weitere vorteilhafte Ausführungsformen ergeben sich aus den Unteransprüchen.

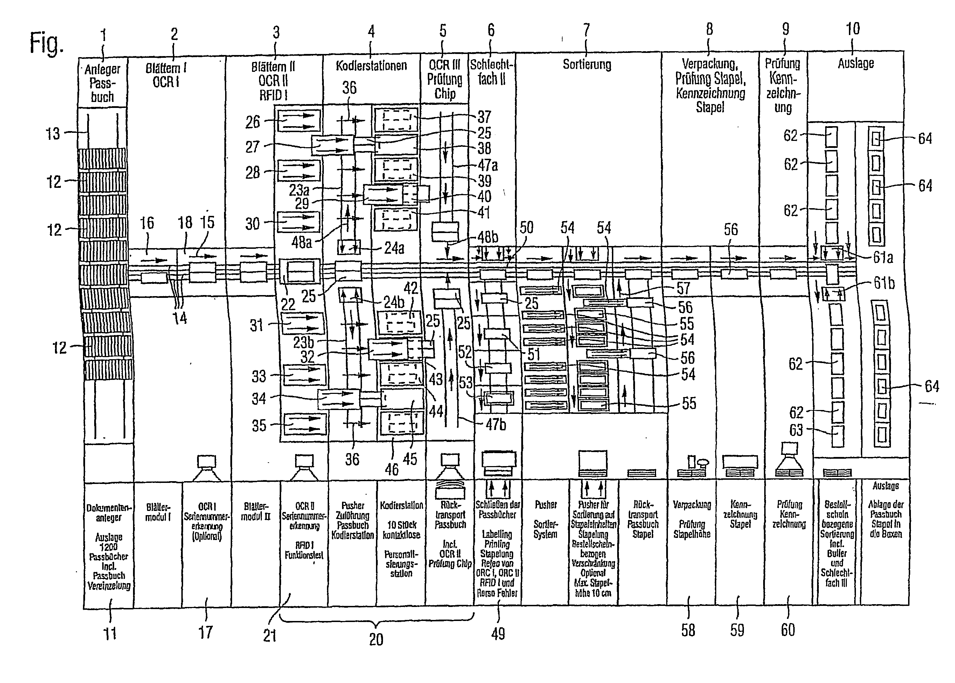

Vorteile und Zweckmäßigkeiten sind auch der nachfolgenden Beschreibung in Verbindung mit der einzigen Figur zu entnehmen.

In der Figur wird in einer schematischen Draufsicht eine Struktur einer Anlage zur Bearbeitung, Sortierung und/oder Verpackung einer Vielzahl von Passbüchern dargestellt, die unter anderem ein erfindungsgemäßes Anlagenmodul 20 zur Personalisierung von in den Passbüchern integrierten Chips beinhaltet.

Eine derartige Anlage besteht aus den Anlagenmodule Passbuchanleger 1, dem Anlagenmodul 2 zum Umblättern und zur Seriennummererkennung, dem Anlagenmodul 3 zum Umblättern und zur Erkennung einer weiteren Seriennummer einschließlich eines RFID-Funktionstestes, dem Anlagenmodul 4 mit Kodierstationen, dem Anlagenmodul 5 mit einem Rücktransport der Passbücher und einer OCR II-Vision Systemüberprüfung der Chips, dem Anlagenmodul 6 zum Schließen der Passbücher und zum Aussortieren fehlerbehafteter Passbücher, dem Anlagenmodul 7 zum Sortieren der Passbücher, dem Anlagenmodul 8 zur Verpackung, Prüfung, Stapelung und Kennzeichnung der Verpackungsstapel, dem Anlagenmodul 9 zur Prüfung der Kennzeichnung der Stapel und dem Anlagenmodul 10 mit einer Auslage zur Ablage der Passbücherstapel in verschiedenen Boxen.

In dem Anlagenmodul 1 wird - wie mit dem Bezugszeichen 11 dargestellt - in einem Dokumentenanleger die Auslage beziehungsweise zur Verfügungstellung von 1.200 Passbüchern einschließlich einer Passbuchvereinzelung ermöglicht. Hierfür sind die Passbücher in geschlossener Form in 10 Anlegeeinheiten ausgelegt. Jede Anlegeeinheit hat eine Kapazität von bis zu 120 Passbüchern bei einer maximalen Buchdicke von 5 mm. Die Bereitstellung der Passbücher bei einem Wechsel von einem Anleger zum Nächsten erfolgt unterbrechungsfrei. Die Kapazität des Anlegers beträgt somit bis zu 1.200 Passbücher.

Auf einer Schiene 13 sind die einzelnen Anlegereinheiten 12 verschiebbar, um jeweils vor einem Haupttransportweg 14 zur Übertragung der einzelnen Passbücher auf den Haupttransportweg 14 Positioniert zu werden.

Über eine Vereinzelung werden die Passbücher dem Haupttransportweg 14 übergeben. Die Handhabung der Reisepässe durch das Vereinzelungssystem erfolgt in geeigneter Form, so dass keine Schäden am Einbandmaterial der Pässe entstehen. Hierbei können Reisepässe sowohl mit Fest- als auch mit Flexdecken mittels dem Vereinzelungssystem vereinzelt werden.

Der Haupttransportweg 14 weist eine Ersttransportrichtung 15 auf. In einem ersten Umblättermodul 16 werden die Reisepässe geöffnet und in geöffnetem Zustand weiter transportiert. In einem Seriennummererkennungsabschnitt 18 findet eine Erkennung der Seriennummer des geöffneten Reisepasses mittels OCR-I-Technik statt, wie es mittels Bezugszeichen 17 dargestellt wird.

In einem weiteren Umblättermechanismusabschnitt 19 werden die Reiseblätter um eine oder mehrere Seiten weiter umgeblättert, um eine weitere Seriennummernerkennung mittels OCR-II-Technik und gegebenenfalls einen RFID-I-Funktionstest, wie es durch das Bezugszeichen 21 dargestellt wird, durchzuführen. Dies betrifft den Abschnitt 22 entlang des Haupttransportweges 14.

In einem Anlagenmodul 20 zur Personalisierung der Reisepässe findet erfindungsgemäß mittels erster Nebentransportwege 23a und 23b ein Umleiten der auf dem Haupttransportweg 14 ankommenden Reisepässe in eine senkrecht zur ersten Transportrichtung 15 verlaufende zweite Transportrichtung, wie es durch das Bezugszeichen 48a dargestellt wird, statt. Hierfür sind an den zu dem Haupttransportweg zugewandten Enden der Nebentransportwege 23a und 23b zweite Verschiebeeinrichtungen 24a und 24b angeordnet, um ein Schieben der Reisepässe 25 von dem Haupttransportweg 14 auf die Nebentransportwege 23a und 23b zu bewirken.

In Richtung der ersten Transportrichtung 15 verschiebbare Transportelemente 26, 27, 28, 29, 30, 31, 32, 33, 34, 35 sind in ihrer Ausgangsposition entgegen der ersten Transportrichtung linksseitig von den Nebentransportwegen 23a und 23b angeordnet und dienen dazu; die auf den Nebentransportwegen transportierten Reisepässe 25 über jeweils zugeordnete Kodierstationen 37, 38, 39, 40, 41, 42, 43, 44, 45, 46 zu verschieben, wie es durch den Richtungspfeil 36 angezeigt wird. Nach erfolgter Positionierung über den einzelnen Kodierstationen 37-46 findet eine Personalisierung mittels elektronischer kontaktloser Kodierung der in den Reisepässen eingebrachten Chips statt. Anschließend schieben die Transportelemente 26-35 den Reisepass mit dem Kodierten Chip auf einen zweiten Nebentransportweg 47a und 47b, welcher die Passbücher im geöffneten Zustand zurück auf den Haupttransportweg 14 leitet. Dies wird durch die Pfeile 48a und 48b angedeutet.

Während des Zurückleitens der Passbücher auf den zweiten Nebentransportwegen 47a und 47b kann zeitgleich eine OCR-11-Vision Systemprüfung des Kodierten Chips stattfinden, um eine fehlerfreie Kodierung des Chips festzustellen. Sofern hierbei Fehler festgestellt werden, werden die betreffenden Passbücher - mittlerweile auf den Haupttransportweg 15 weitergeleitet - in dem Anlagenmodul 6 in ein Schlechtfach aussortiert. Zugleich werden die noch geöffneten Reisepässe 25 wieder geschlossen, wie es durch das Bezugszeichen 50 dargestellt wird, und mittels der Verfahrensschritte Labeling, Printing und Stapelung als fehlerbehaftete Reisepässe gekennzeichnet. Dies wird durch das Bezugszeichen 49 dargestellt.

Mittels Schiebeeinrichtungen 54 beziehungsweise Pusher werden in dem Anlagenmodul 7 der Sortierung Reisepässe 55 dem einzelnen Stapel 56 zugeordnet, wie es beispielsweise durch Bestellscheine vorbestimmt wird. Anschließend findet ein Rücktransport der Stapel 56 zu dem Haupttransportweg 15 statt. Dies wird durch den Pfeil 57 dargestellt.

Die Stapel 56 werden entlang des Haupttransportweges 14 mit der ersten Transportrichtung 15 weitertransportiert und in dem Anlagenmodul 8 verpackt und eine Prüfung der Stapelhöhe durchgeführt, wie es durch das Bezugszeichen 58 dargestellt wird.

Gemäß dem Bezugszeichen 59 findet eine Kennzeichnung der Stapel statt. Anschließend wird diese Kennzeichnung überprüft, wie es durch das Bezugszeichen 60 dargestellt wird.

Mittels Pusher 61 a und 61b werden die Stapel links- und rechtsseitig des Haupttransportweges 14 bestellscheinbezogen sortiert und gegebenenfalls zwischengelagert beziehungsweise in einem Schlechtfach aussortiert. Das Schlechtfach ist mit dem Bezugszeichen 63 gekennzeichnet. Anschließend findet eine Ablage der Passbuchstapel in Boxen 64 statt.

### Bezugszeichenliste

- 1 - 10: Anlagenmodule der Anlage
- 11: Darstellung des Dokumentenanlegens
- 12: Anlegereinheit
- 13: Anlegerschiene
- 14: Haupttransportweg
- 15: erste Transportrichtung
- 16: Blättermodul
- 17: Darstellung der Seriennummernerkennung
- 18: Seriennummernerkennungsabschnitt
- 19: Blättermodulabschnitt
- 20: Anlagenmodul zur Personalisierung der Chips
- 21: Darstellung der OCR-II-Seriennummernerkennung und eines RFID-I-Funktionstestes
- 22: Abschnitt zur Durchführung der Seriennummernerkennung und des Funktionstestes
- 23a, 23b: Nebentransportwege
- 24a, 24b: Schiebeeinrichtungen
- 25: geöffneter Reisepass
- 26 - 35: Transportelemente
- 36: Verschieberichtung der Transportelemente
- 37 - 46: Kodierstationen
- 47a, 47b: Nebentransportweg
- 48a: ZweiteTransportrichtung
- 48b: Dritte Transportrichtung
- 49: Darstellung des Schließens der Passbücher
- 50: Anlagenmodulabschnitt zum Schließen der Passbücher
- 51, 52, 53: Labeling, Bedruckung und Stapelung aussortierter Passbücher
- 54: Pusher
- 55: Geschlossene Reisepässe
- 56: Reisepassstapel
- 57: Transportrichtung der geschlossenen Reisepassstapel
- 58: Darstellung der Verpackung und Prüfung der Stapelhöhe
- 59: Darstellung der Kennzeichnung der Stapel
- 60: Darstellung der Prüfung der Kennzeichnung
- 61a, 61b: Pusher
- 62: Reisepassstapel im verpackten Zustand
- 63: Schlechtfach Reisepassstapel
- 64: Boxen

## Patentansprüche

1. Anlagenmodul (4, 20) zur kontaktlosen Personalisierung von in Passbüchern (25) integrierten Chips
für eine Anlage mit einer Mehrzahl von Anlagenmodulen (1 - 10, 20) zur Bearbeitung, Sortierung und/oder Verpackung einer Vielzahl von Passbüchern (25),
wobei die Anlage einen geradlinig verlaufenden Haupttransportweg (14) mit erster Transportrichtung (15) zum Hintereinandertransportieren der Passbücher (25) durch die Anlage aufweist, und
wobei das Anlagenmodul eine Mehrzahl von Kodierstationen (37-46) zum Kodieren der Chips der Passbücher (28) aufweist,
**dadurch gekennzeichnet, dass**
das Anlagenmodul (4, 20) eine gleiche Mehrzahl von den Kodierstationen (37-46) jeweils zugeordneten, in die erste Transportrichtung (15) verschiebbaren Transportelementen (26-35) umfasst,
wobei die Kodierstationen (37 - 46) beiderseits des Haupttransportweges (14) und entlang jeweils einem mit dem Haupttransportweg (14) verbindbarem geradlinig verlaufendem erstem Nebentransportweg (23a, 23b) zum Abführen der Passbücher (25) von dem Haupttransportweg (14) in senkrecht zur ersten Transportrichtung (15) verlaufenden zweiten Transportrichtungen (48a) angeordnet sind, und
wobei die Transportelemente (26 - 35) zum Aufnehmen der Passbücher (25) von den Nebentransportwegen (23a, 23b), zur Positionierung der Passbücher (25) in den zugeordneten Kodierstationen (37-46) und zur anschließenden Ablage der Passbücher (25) auf zum Haupttransportweg (14) in einer dritten Transportrichtung (48b) zurücklaufende zweite Nebentransportwege (47a, 47b) ausgestaltet sind, wobei die dritte Transportrichtung (48b) entgegengesetzt zur zweiten Transportrichtung (48a) verlaüft.

2. Anlagenmodul nach Anspruch 1,
**dadurch gekennzeichnet, dass**
die verschiebbaren Transportelemente (26-35) auf einer in den Kodierstationen abgewandten Seite der ersten Nebentransportwege (23a, 23b) in einer Ausgangsstellung stationierbar sind.

3. Anlagenmodul nach Anspruch 1 oder 2,
**dadurch gekennzeichnet, dass**
die Transportelemente (26-35) als erste Schiebeeinrichtungen zum Anschieben der ihnen zugeordneten Passbücher (25) von einem ersten Nebentransportweg (23a, 23b) über die Kodierstation (37-46) zu einem zweiten Nebentransportweg (47a, 47b) in eine parallel zur ersten Transportrichtung (15) verlaufende Transportrichtung (36) ausgestaltet sind.

4. Anlagenmodul nach einem der vorangegangenen Ansprüche,
**gekennzeichnet durch**,
den ersten Nebentransportwegen (23a, 23b) zugeordnete zwei zweite Schiebeeinrichtungen (24a, 24b) zum Schieben der auf dem Haupttransportweg (14) angeordneten Passbücher (25) auf jeweils den der zweiten Schiebeeinrichtung (24a, 24b) in Bezug auf den Haupttransportweg (14) gegenüberliegenden Nebentransportweg (23a, 23b).

5. Verfahren zur kontaktlosen Personalisierung von in Passbüchern integrierten Chips innerhalb einer Anlage zur Bearbeitung, Sortierung und/oder Verpackung einer Vielzahl von Passbüchern (25),
wobei die Passbücher (25) auf einem geradlinig verlaufenden Haupttransportweg (14) mit einer ersten Transportrichtung (15) durch die Anlage hintereinander von Anlagenmodul (1-10, 20) zu Anlagenmodul (1-10, 20) der Anlage transportiert werden,
wobei die Passbücher (25) in einem Anlagenmodul (4, 20) zur Personalisierung der Chips beiderseits des Haupttransportweges (14) auf jeweils einen geradlinig verlaufenden ersten Nebentransportweg (23a, 23b) umgeleitet werden,
wobei die ersten Nebentransportwege (23a, 23b) eine senkrecht zur ersten Transportrichtung (15) verlaufende zweite Transportrichtung (48a) haben, um die Passbücher (25) vor einer von einer Mehrzahl von entlang den beiden ersten Nebentransportwegen (23a, 23b) in der zweiten Transportrichtung (48a) angeordneten Kodierstationen (37-46) zu positionieren,
**dadurch gekennzeichnet, dass**
die positionierten Passbücher (25) mittels den Kodierstationen (37-46) zugeordneten Transportelementen (26-35) in Abhängigkeit davon, ob die betreffende Kodierstation unbesetzt ist von den ersten Nebentransportwegen (23a, 23b) zu den Kodierstationen (37-46) und nach erfolgter Kodierung zu zweiten Nebentransportwegen (47a, 47b) in erster Transportrichtung (36)
einzeln verschoben werden, und,
dass die zweiten Nebentransportwege (47a, 47b) die Passbücher (25) zum Haupttransportweg (14) in einer dritten Transportrichtung (48b) zurückleiten, wobei die Transportrichtung (48b) entgegengesetzt zur zweiten Transportrichtung (48a) verläuft.

6. Verfahren nach Anspruch 5,
**dadurch gekennzeichnet, dass**
die Transportelemente (26-35) auf einer den Kodierstationen (37-46) abgewandten Seite der ersten Nebentransportwege (23a, 23b) in eine Ausgangsstellung stationiert werden.

7. Verfahren nach Anspruch 5 oder 6,
**dadurch gekennzeichnet, dass**
ein einzelnes Passbuch (25) auf einem der ersten Nebentransportwege (23a, 23b) mittels einer Schiebeeinrichtung (24a, 24b) von dem Haupttransportweg (14) weg zu einer unbesetzten Kodierstation (37-46) verschoben wird.

8. Verfahren nach einem der Ansprüche 5 - 7,
**dadurch gekennzeichnet,dass**
die Chips der Passbücher (25) in den Kodierstationen (37-46) vorpersonalisiert sowie personalisiert und gegebenenfalls anfänglich initialisiert werden.

9. Verfahren nach einem der Ansprüche 5 - 8,
**dadurch gekennzeichnet, dass**
jedes Passbuch (25) in dem Anlagenmodul (20) zur Personalisierung senkrecht zur ersten Transportrichtung (15) und anschließend über der Kodierstation (37-46) parallel zur ersten Transportrichtung (15) genau positioniert wird.

## Claims

1. System module (4, 20) for a contactless personalisation of chips integrated into passports (25)
for a system with a plurality of system modules (1-10, 20) for processing, sorting and/or packaging a large number of passports (25),
wherein the system comprises a straight main transport path (14) with a first transport direction (15) for transporting the passports (25) one behind the other through the system, and
wherein the system module comprises a plurality of coding stations (37-46) for coding the chips of the passports (25),
**characterised in that**
the system module (4, 20) has an equal plurality of transport elements (26-35) which are respectively assigned to the coding stations (37-46) and can be displaced in the first transport direction (15),
wherein the coding stations (37-46) are arranged on both sides of the main transport path (14) and along a respective straight first auxiliary transport path (23a, 23b) connectable to the main transport path (14) for leading the passports (25) away from the main transport path (14) in a second transport direction (48a) running perpendicular to the first transport direction (15), and
wherein the transport elements (26-35) are designed for picking up the passports (25) from the auxiliary transport paths (23a, 23b), for positioning the passports (25) in the assigned coding stations (37-46) and for subsequently deposing the passports (25) on second auxiliary transport paths (47a, 47b) running back towards the main transport path (14) in a third transport direction (48b), wherein the third transport direction (48b) runs in opposite to the second transport direction (48a).

2. System module according to claim 1, **characterised in that** the displaceable transport elements (26-35) can be stationed in a starting position on a side of the first auxiliary transport paths (23a, 23b) remote from the coding stations.

3. System module according to claim 1 or 2, **characterised in that** the transport elements (26-35) are designed as first pushers for pushing the passports (25) assigned to them from the first auxiliary transport path (23a, 23b) over the coding stations (37-46) to the second auxiliary transport path (47a, 47b) in a transport direction (36) running parallel to the first transport direction (15).

4. System module according to one of the preceding claims, **characterised by** two second pushers (24a, 24b) assigned to the first auxiliary transport paths (23a, 23b) for pushing the passports (25) arranged on the main transport path (14) onto the respective first auxiliary transport path (23a, 23b) located opposite the second pusher (24a, 24b) with respect to the main transport path (14).

5. Method for the contactless personalisation of chips integrated into passports within a system for processing, sorting and/or packaging a large number of passports (25),
wherein the passports (25) are transported through the system one behind the other from system module (1-10, 20) to system module (1-10, 20) of the system on a straight main transport path (14) with a first transport direction (15),
wherein the passports (25) are diverted for personalisation of the chips on both sides of the main transport path (14) onto a respective straight first auxiliary transport path (23a, 23b),
wherein the first auxiliary transport paths (23a, 23b) have a second transport direction (48a) running perpendicular to the first transport direction (15), in order to position the passports (25) in front of one of a plurality coding stations (37-46) arranged in the second transport direction (48a) along the two first auxiliary transport paths (23a, 23b)
**characterised in that**
the positioned passports (25) are individually displaced in a first transport direction (36) by means of transport elements (26-35) assigned to the coding stations (37-46), depending on whether the respective coding station is unoccupied, from the first auxiliary transport paths (22a, 23b) to the coding stations (37-46) and then, after coding has taken place, to second auxiliary transport paths (47a, 47b), and
**in that** the second auxiliary transport paths (47a, 47b) pass the passports (25) back to the main transport path (14) in a third transport direction (48b), wherein the third transport direction (48b) runs in opposite to the second transport direction (48a).

6. Method according to claim 5, **characterised in that** the transport elements (26-35) are stationed in a starting position on a side of the first auxiliary transport paths (23a, 23b) remote from the coding stations (37-46).

7. Method according to claim 5 or 6, **characterised in that** an individual passport (25) is displaced from the main transport path (14) towards an unoccupied coding station (37-46) on one of the first auxiliary transport paths (23a, 23b) by means of a pusher (24a, 24b).

8. Method according to one of claims 5 to 7, **characterised in that** the chips of the passports (25) are pre-personalised as well as personalised and optionally preliminarily initialised in the coding stations (37-46).

9. Method according to one of claims 5 to 8, **characterised in that** each passport (25) is precisely positioned in the system module (20) for personalisation perpendicular to the first transport direction (15) and then above the coding station (37-46) parallel to the first transport direction (15).

## Revendications

1. Module (4, 20) pour personnaliser sans contact des puces intégrées à des passeports (25)
pour une installation équipée d'une pluralité de modules (1 à 10, 20) et destinée au traitement, au tri et/ou à l'emballage d'une pluralité de passeports (25),
ladite installation présentant une voie d'acheminement principale (14) qui s'étend de façon linéaire, possède une première direction d'acheminement (15) et sert à l'acheminement successif des passeports (25) dans l'installation, et
ledit module présentant une pluralité de stations de codage (37 à 46) destinées au codage des puces des passeports (28),
**caractérisé en ce que**
le module (4, 20) comprend le même nombre d'éléments d'acheminement (26 à 35) qui sont respectivement associés aux stations de codage (37 à 46) et peuvent se déplacer dans la première direction d'acheminement (15),
les stations de codage (37 à 46) étant disposées des deux côtés de la voie d'acheminement principale (14) et respectivement le long d'une première voie d'acheminement secondaire (23a, 23b) qui s'étend de façon linéaire, peut être reliée à la voie d'acheminement principale (14) et sert à retirer les passeports (25) de la voie d'acheminement principale (14) dans une deuxième direction d'acheminement (48a) perpendiculaire à la première direction d'acheminement (15), et
les éléments d'acheminement (26 à 35) étant conçus pour prendre en charge les passeports (25) sur les voies d'acheminement secondaires (23a, 23b) et les positionner dans les stations de codage (37 à 46) associées ainsi que pour les déposer ensuite sur des deuxièmes voies d'acheminement secondaires (47a, 47b) retournant dans une troisième direction d'acheminement (48b) vers la voie d'acheminement principale (14), ladite troisième direction d'acheminement (48b) se déplaçant dans le sens contraire de la deuxième direction d'acheminement (48a).

2. Module selon la revendication 1,
**caractérisé en ce que**
les éléments d'acheminement déplaçables (26 à 35) peuvent être stationnés dans une position de sortie sur un côté des premières voies d'acheminement secondaires (23a, 23b) opposé aux stations de codage.

3. Module selon la revendication 1 ou 2,
**caractérisé en ce que**
les éléments d'acheminement (26 à 35) sont conçus comme premiers dispositifs de déplacement servant à faire avancer les passeports (25) qui leur sont associés pour les acheminer d'une première voie d'acheminement secondaire (23a, 23b) au-dessus de la station de codage (37 à 46) vers une seconde voie d'acheminement secondaire (47a, 47b) dans une direction d'acheminement (36) se déplaçant parallèlement à la première direction d'acheminement (15).

4. Module selon l'une des revendications précédentes,
**caractérisé par**
deux seconds dispositifs de déplacement (24a, 24b) associés aux premières voies d'acheminement secondaires (23a, 23b) et servant à faire avancer les passeports (25) disposés sur la voie d'acheminement principale (14) sur la voie d'acheminement secondaire (23a, 23b) opposée au second dispositif de déplacement (24a, 24b) par rapport à la voie d'acheminement principale (14).

5. Procédé pour personnaliser sans contact des puces intégrées à des passeports (25) dans une installation destinée au traitement, au tri et/ou à l'emballage d'une pluralité de passeports (25),
les passeports (25) étant acheminés dans l'installation successivement d'un module (1 à 10, 20) à l'autre sur une voie d'acheminement principale (14) qui s'étend de façon linéaire et se déplace dans une première direction d'acheminement (15),
les passeports (25) d'un module (4, 20) pour personnaliser les puces des deux côtés de la voie d'acheminement principale (14) étant déviés sur respectivement une première voie d'acheminement secondaire (23a, 23b) qui s'étend de façon linéaire,
les premières voies d'acheminement secondaires (23a, 23b) possédant une deuxième direction d'acheminement (48a) s'étendant perpendiculairement à la première direction d'acheminement (15) pour positionner les passeports (25) devant une des nombreuses stations de codage (37 à 46) disposées le long des deux premières voies d'acheminement secondaires (23a, 23b) dans la deuxième direction d'acheminement (48a).
**caractérisé en ce que**
les passeports positionnés (25) sont, selon que la station de codage concernée est inoccupée, déplacés un à un à l'aide des éléments d'acheminement (26 à 35) associés aux stations de codage (37 à 46) pour être acheminés des premières voies d'acheminement secondaires (23a, 23b) vers les stations de codage (37 à 46) et, une fois le codage effectué, vers les deuxièmes voies d'acheminement secondaires (47a, 47b) dans la première direction d'acheminement (36), et **en ce que** les deuxièmes voies d'acheminement secondaires (47a, 47b) reconduisent les passeports (25) vers la voie d'acheminement principale (14) dans une troisième direction d'acheminement (48b), la troisième direction d'acheminement se déplaçant dans le sens contraire de la deuxième direction d'acheminement (48a).

6. Procédé selon la revendication 5,
**caractérisé en ce que**
les éléments d'acheminement (26 à 35) sont stationnés dans une position de sortie sur un côté des premières voies d'acheminement secondaires (23a, 23b) opposé aux stations de codage (37 à 46).

7. Procédé selon la revendication 5 ou 6,
**caractérisé en ce que**
un seul passeport (25) est déplacé sur une des premières voies d'acheminement (23a, 23b) à l'aide d'un dispositif de déplacement (24a, 24b) pour être acheminé de la voie d'acheminement principale (14) vers une station de codage inoccupée (37 à 46).

8. Procédé selon l'une des revendications 5 à 7,
**caractérisé en ce que**
les puces des passeports (25) sont pré-personnalisées ainsi que personnalisées et éventuellement premièrement initialisées dans les stations de codage (37 à 46).

9. Procédé selon l'une des revendications 5 à 8,
**caractérisé en ce que**
chaque passeport (25) dans le module de personnalisation (20) est positionné avec précision, tout d'abord perpendiculairement à la première direction d'acheminement (15) et ensuite au-dessus de la station de codage (37 à 46), parallèlement à la première direction d'acheminement (15).
